(19) Europäisches Patentamt
European Patent Office
Office européen des brevets

(11) Veröffentlichungsnummer: **0 004 973**
**B1**

# (12) EUROPÄISCHE PATENTSCHRIFT

(45) Veröffentlichungstag der Patentschrift: **14.07.82**

(51) Int. Cl.³: **C 08 L 59/02**

(21) Anmeldenummer: **79101182.8**

(22) Anmeldetag: **19.04.79**

(54) **Thermoplastische Formmassen auf Basis von Polyoxymethylenen.**

(30) Priorität: **26.04.78 DE 2818240**

(43) Veröffentlichungstag der Anmeldung: **31.10.79 Patentblatt 79/22**

(45) Bekanntmachung des Hinweises auf die Patenterteilung: **14.07.82 Patentblatt 82/28**

(84) Benannte Vertragsstaaten: **BE CH DE FR GB IT NL SE**

(56) Entgegenhaltungen:
**DE-A-1 494 932**
**DE-A-2 209 985**
**FR-A-2 288 121**
**US-A-3 796 715**

(73) Patentinhaber: **HOECHST AKTIENGESELLSCHAFT, Postfach 80 03 20, D-6230 Frankfurt/Main 80 (DE)**

(72) Erfinder: **Burg, Karlheinz, Dr., Eichenweg 18, D-6200 Wiesbaden (DE)**
Erfinder: **Schmieder, Werner, Dr., Theresenstrasse 37, D-6233 Kelkheim (Taunus) (DE)**
Erfinder: **Wolters, Ernst, Dr., Am Erdbeerstein 48, D-6240 Königstein (DE)**

**EP 0 004 973 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Thermoplastische Formmassen auf Basis von Polyoxymethylenen

Thermoplastische Formmassen auf Basis von Polyoxymethylen, d. h. von Oxymethylen-Homopolymeren und Oxymethylen-Copolymeren, sind seit langem als Werkstoffe bekannt, die vor allem auf technischem Sektor Anwendung gefunden haben. Es ist weiterhin bekannt, daß durch Mischen dieser Polyoxymethylene mit geeigneten Elastomeren, z. B. mit Polyestern aus aliphatischen Dicarbonsäuren und $\alpha,\omega$-Diolen gemäß US-Patentschrift 3 795 715 oder mit Copolyestern aus aromatischen Dicarbonsäuren und Diolen verschiedenen Molekulargewichts gemäß DE-A-2 449 343 oder mit Copolymeren aus Ethylen und Vinylacetat bzw. Acrylestern gemäß DE-A-1 769 560 oder mit Polyurethanen aus Polyhydroxylverbindungen, Polyisocyanaten und Kettenverlängerungsmitteln gemäß DE-B-1 193 240, Produkte erhalten werden, deren Schlagzähigkeiten im Vergleich zu nicht modifiziertem Polyoxymethylen verbessert sind.

Nachteilig bei diesen bekannten Zweier-Gemischen ist insbesondere, daß ein Teil der mechanischen Eigenschaften, vor allem die Schlagzähigkeit der daraus hergestellten Formkörper für viele Anwendungszwecke noch nicht ausreichend ist, daß weiterhin die Verarbeitungsbreite dieser Zweier-Gemische ziemlich eng ist und daß bei deren Herstellung erhebliche Scherkräfte zur Homogenisierung erforderlich sind.

Aufgabe der vorliegenden Erfindung war es daher, insbesondere die vorstehenden Nachteile zu beseitigen.

Zur Lösung dieser Aufgabe werden Dreier-Gemische vorgeschlagen, die neben dem Polyoxymethylen spezielle Elastomerkomponenten und spezielle Verarbeitungshilfsmittel enthalten.

Die Erfindung betrifft demnach thermoplastische Formmassen auf Polyoxymethylenbasis, bestehend aus einer Mischung von

A) 99,89 bis 60 Gew.-% eines Polyoxymethylens,
B) 0,1 bis 40 Gew.-% eines Elastomeren mit einer Erweichungstemperatur unterhalb des Kristallitschmelzpunktes des Polyoxymethylens gemäß A und mit einer Einfriertemperatur von $-120°C$ bis $+30°C$ und
C) 0,01 bis 20 Gew.-% eines segmentierten, thermoplastischen Copolyesters oder eines Polyurethans.

Der Anteil des als Komponente A verwendeten Polyoxymethylens beträgt vorzugsweise 99,49 bis 80 Gew.-%, der Anteil der Elastomerkomponente B vorzugsweise 0,5 bis 20 Gew.-% und der Anteil des Verarbeitungshilfsmittels C vorzugsweise 0,01 bis 10 Gew.-%.

Besonders gute Ergebnisse werden mit einer Mischung erhalten, die sich aus 98,5 bis 90 Gew.-% der Komponenten A, 1,0 bis 10 Gew.-% der Komponente B und 0,05 bis 5 Gew.-% der Komponente C zusammensetzt.

Die Komponenten A, B und C können ihrerseits aus Polymer- oder Copolymergemischen bestehen, die jeweils den im folgenden gegebenen Beschreibungen für A, B und C genügen.

Unter den als Komponente A verwendeten Polyoxymethylenen werden insbesondere Homopolymere von Formaldehyd oder Trioxan oder Trioxan-Copolymere verstanden, die vorzugsweise eine lineare Struktur aufweisen.

Homopolymere von Formaldehyd oder Trioxan sind dabei solche Formaldehyd- oder Trioxan-Homopolymere, deren Hydroxyl-Endgruppen in bekannter Weise chemisch, z. B. durch Veresterung oder Veretherung, gegen Abbau stabilisiert sind.

Unter Trioxan-Copolymeren sind Copolymere aus Trioxan und cyclischen Ethern, cyclischen Acetalen und/oder linearen Polyacetalen zu verstehen, die primäre Alkoholgruppen aufweisen.

Als Comonomere für Trioxan kommen a) cyclische Ether mit 3, 4 oder 5, vorzugsweise 3 Ringgliedern, b) von Trioxan verschiedene cyclische Acetale mit 5 bis 11, vorzugsweise 5, 6, 7 oder 8 Ringgliedern und c) lineare Polyacetale, jeweils in Mengen von 0,1 bis 20, vorzugsweise 0,5 bis 10 Gew.-%, in Frage. Am besten eignen sich Copolymere aus 99 bis 95 Gew.-% Trioxan und 1 bis 5 Gew.-% einer der vorgenannten Cokomponenten.

Als Comonomere für Trioxan sind besondere Verbindungen der Formel

$$\underbrace{CH_2-[CR^1H]_x-[O-(CR^2H)_z]_y-O}_{} \qquad (I)$$

geeignet, in der

A) $R^1$ und $R^2$ gleich oder verschieden sind und jeweils ein Wasserstoffatom, einen aliphatischen Alkylrest mit 1 bis 6, vorzugsweise 1, 2, 3 oder 4 Kohlenstoffatomen oder einen Phenylrest bedeuten und
   a) x gleich 1, 2 oder 3 und y gleich Null ist oder
   b) x gleich Null, y gleich 1, 2 oder 3 und z gleich 2 ist oder

c) x gleich Null, y gleich 1 und z gleich 3, 4, 5 oder 6 ist, oder

B) $R^1$ einen Alkoxymethylrest mit 2 bis 6, vorzugsweise 2, 3 oder 4 Kohlenstoffatomen oder einen Phenoxymethylrest bedeutet, wobei x gleich 1 und y gleich Null ist und $R^2$ die oben genannte Bedeutung hat.

Als cyclische Ether kommen vor allem Epoxide, z. B. Ethylenoxid, Styroloxid, Propylenoxid und Epichlorhydrin sowie Phenylglycidylether in Frage.

Als cyclische Acetale eignen sich vor allem cyclische Formale von aliphatischen oder cycloaliphatischen $\alpha,\omega$-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z. B. Glykolformal (1,3-Dioxolan), Propandiolformal (1,3-Dioxan), Butandiolformal (1,3-Dioxepan), und Diglykolformal (1,3,6-Trioxocan) sowie 4-Chlormethyl-1,3-dioxolan und Hexandiolformal (1,3-Dioxonan).

Auch ungesättigte Formale wie Butendiolformal (1,3-Dioxacyclohepten-[5]) kommen in Frage.

Als lineare Polyacetale eignen sich sowohl Homo- oder Copolymere der vorstehend definierten cyclischen Acetale als auch lineare Kondensate aus aliphatischen oder cycloaliphatischen $\alpha,\omega$-Diolen mit aliphatischen Aldehyden, vorzugsweise Formaldehyd. Insbesondere werden Homopolymere cyclischer Formale von aliphatischen $\alpha,\omega$-Diolen mit 2 bis 8, vorzugsweise 2, 3 oder 4 Kohlenstoffatomen verwendet, z. B. Poly(1,3-dioxolan), Poly(1,3-dioxan) und Poly(1,3-dioxepan).

Als zusätzliche Comonomere für Trioxan werden gegebenenfalls noch Verbindungen mit mehreren polymerisierbaren Gruppen im Molekül, z. B. Alkylglycidylformale, Polyglykoldiglycidylether, Alkandioldiglycidylether oder Bis(alkantriol)-triformale, verwendet, und zwar in einer Menge von 0,05 bis 5, vorzugsweise 0,1 bis 2 Gew.-%, bezogen auf die Gesamtmonomermenge.

Unter Alkylglycidylformalen sind Verbindungen der Formel (II) zu verstehen

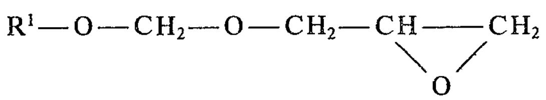

(II)

in der $R^1$ einen aliphatischen Alkylrest mit 1 bis 10, vorzugsweise 1 bis 5 Kohlenstoffatomen bedeutet. Besonders gut geeignet sind Alkylglycidylformale der obigen Formel mit linearen, gesättigten aliphatischen Alkylresten, z. B. Methylglydicylformal, Ethylglycidylformal, Propylglycidylformal und Butylglycidylformal.

Als Polyglykoldiglycidylether werden Verbindungen der Formel (III) bezeichnet

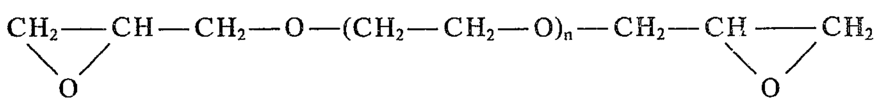

(III)

in der n eine ganze Zahl von 2 bis 5 bedeutet. Insbesondere eignen sich Polyglykoldiglycidylether der vorstehenden Formel, in der n 2 oder 3 bedeutet, z. B. Diethylenglykoldiglycidylether und Triethylenglykol-diglycidylether.

Als Alkandioldiglycidylether werden Verbindungen der Formel (IV) bezeichnet

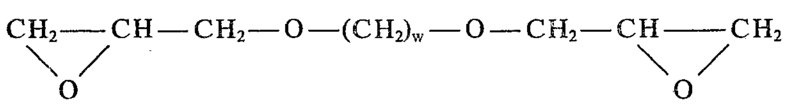

(IV)

in der w eine ganze Zahl von 2 bis 6, vorzugsweise 2, 3 oder 4 bedeutet.

Insbesondere geeignet ist Butandioldiglycidylether.

Unter Bis(alkantriol)-triformalen werden Verbindungen mit einer linearen und zwei cyclischen Formalgruppen verstanden, insbesondere Verbindungen der Formel (V)

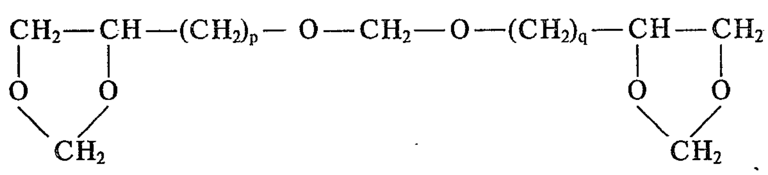

(V)

in der p und q jeweils eine ganze Zahl von 3 bis 9, vorzugsweise 3 oder 4, bedeuten. Es eignen sich vor allem symmetrische Bis-(alkantriol)-triformale der vorgenannten Formel, in der p und q die gleiche Zahl bedeuten, z. B. Bis(1,2,5-pentantriol)-triformal und vorzugsweise Bis(1,2,6-hexantriol)-triformal.

Die Werte für die reduzierte spezifische Viskosität (RSV-Werte) des Polyoxymethylens betragen im allgemeinen 0,3 bis 2,0 dl · $g^{-1}$, vorzugsweise 0,5 bis 1,5 dl · $g^{-1}$ (gemessen in Butyrolacton,

stabilisiert mit 2 Gew.-% Diphenylamin bei 140° C in einer Konzentration von 0,5 g/100 ml).

Die Kristallitschmelzpunkte der Polyoxymethylene liegen im Bereich von 140 bis 180°C, vorzugsweise 150 bis 170°C; ihre Dichten betragen 1,38 bis 1,45 g · $ml^{-1}$, vorzugsweise 1,40 bis 1,43 g · $ml^{-1}$ (gemessen nach DIN 53 479).

Die erfindungsgemäß verwendeten, vorzugsweise binären oder ternären Trioxan-Copolymeren werden in bekannter Weise durch Polymerisieren der Monomeren in Gegenwart kationisch wirksamer Katalysatoren bei Temperaturen zwischen 0 und 100°C, vorzugsweise zwischen 50 und 90°C, hergestellt (vgl. z. B. US-Patentschrift 3 027 352). Als Katalysatoren werden hierbei beispielsweise Lewissäuren, z. B. Bortrifluorid und Antimonpentafluorid, und Komplexverbindungen von Lewissäuren, vorzugsweise Etherate, z. B. Bortrifluoriddiethyletherat und Bortrifluorid-di-tert.-butyl-etherat, verwendet. Ferner sind geeignet Protonensäure, z. B. Perchlorsäure, sowie salzartige Verbindungen, z. B. Triphenylmethylhexafluorophosphat, Triethyloxoniumtetrafluoroborat oder Acetylperchlorat. Die Polymerisation kann in Masse, Suspension oder Lösung erfolgen. Zur Entfernung instabiler Anteile werden die Copolymeren zweckmäßigerweise einem thermischen oder hydrolytischen kontrollierten, partiellen Abbau bis zu primären Alkoholendgruppen unterworfen (vgl. US-Patentschriften 3 103 499 und 3 219 623).

Die erfindungsgemäß verwendeten Homopolymeren des Formaldehyds oder des Trioxans werden ebenfalls in bekannter Weise durch katalytisches Polymerisieren des Monomeren hergestellt (vgl. z. B. US-Patentschriften 2 768 994 und 2 989 505).

Unter den als Komponente B verwendeten Elastomeren werden vorzugsweise Homo- und Copolymerisate von olefinisch ungesättigten Verbindungen der Formel (VI) verstanden:

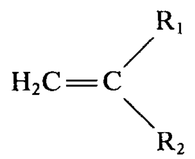

(VI)

in der $R_1$ ein Wasserstoffatom oder ein Methyl- oder Ethylrest ist und $R_2$ ein Wasserstoffatom, eine Carboxylgruppe oder die entsprechenden Salze mit einem Metall der I. bis III. Gruppe des periodischen Systems, insbesondere Alkali-, Erdalkali- oder Zinksalze, eine Alkylcarboxygruppe mit 2 bis 10, vorzugsweise 2 bis 5 Kohlenstoffatomen, eine Acyloxygruppe mit 2 bis 5, vorzugsweise 2 oder 3 Kohlenstoffatomen, eine Cyanogruppe, einen Phenylrest oder einen Vinylrest bedeutet und deren Erweichungstemperatur unterhalb des Kristallitschmelzpunktes des jeweiligen Polyoxymethylens, vorzugsweise zwischen +50°C und +160°C, und deren Einfriertemperatur zwischen −120°C und +30°C, vorzugsweise zwischen −80°C und 0°C liegt.

Als Beispiele seien genannt:

1. Homo- und Copolymerisate von α-Olefinen, z. B. Polyethylen, Ethylen/Propylen-Copolymerisate, Ethylen/Acrylsäureester-Copolymerisate, Ethylen/Methacrylsäureester-Copolymerisate, Ethylen/Acrylsäure-Copolymerisate. Besonders geeignet sind Polyethylen sowie Copolymerisate aus Ethylen mit Vinylacetat und Copolymerisate aus Ethylen mit Acrylsäureester, vorzugsweise der Methyl-, Ethyl-, Butyl- oder 2-Ethylhexylacrylsäureester, in denen der Gewichtsanteil des Ethylens zwischen 40 und 90, vorzugsweise zwischen 50 und 80% liegt.
2. Homo- und Copolymerisate von 1,3-Dienen mit 4 oder 5 Kohlenstoffatomen, z. B. Polybutadien, Polyisopren, Butadien/Styrol-Copolymere, Butadien/Acrylnitril-Copolymere.
3. Homo- und Copolymerisate von Vinylestern, z. B. Polyvinylacetat, Polyvinylpropionat, Polyvinylbutyrat.
4. Homo- und Copolymerisate von Acryl- und Methacrylsäureestern, z. B. Polyethylacrylat, Polybutylacrylat, Polybutylmethacrylat, Polyhexylmethacrylat, Poly-2-ethylhexylmethacrylat, Polyoctylmethacrylat.

Die Molekulargewichte (Gewichtsmittel) der erfindungsgemäß eingesetzten Elastomeren können in weiten Grenzen schwanken. Geeignet sind Produkte mit einem Molekulargewicht von 1000 bis 1 000 000, vorzugsweise von 1000 bis 300 000; besonders gute Ergebnisse wurden mit Mischkomponenten erhalten, die Molekulargewichte zwischen 5000 und 150 000 besitzen. Die Schmelzindices (bei 190°C und 2,16 kp Belastung) liegen im allgemeinen zwischen 1 g/10 Min. und 1000 g/10 Min., vorzugsweise 10 g/10 Min. und 500 g/10 Min.

Unter den als Komponente C verwendeten Verarbeitungshilfsmitteln werden segmentierte, thermoplastische Copolyester oder Polyurethane verstanden, die im allgemeinen elastomeren Charakter haben und eine Durometer-Härte (ASTM-D-2240) zwischen A 75 und A 96 bzw./und zwischen D 40 und D 72 aufweisen.

Die RSV-Werte (gemessen in einer Phenol/Tetrachlorkohlenstoff-Mischung im Gewichtsverhältnis 3 : 2 bei 25°C in einer Konzentration von 1 g/100 ml) betragen in der Regel 0,8 bis 3,2 dl · $g^{-1}$, vorzugsweise 1,5 bis 3,0 dl · $g^{-1}$.

Die Copolyester bestehen aus a) langkettigen Estereinheiten und b) kurzkettigen Estereinheiten, welche über Esterbindungen in Kopf-Schwanz-Verknüpfung miteinander verbunden sind. Der Anteil der langkettigen Estereinheiten beträgt vorzugsweise 70 bis 50 Gew.-% und der der kurzkettigen Estereinheiten vorzugsweise 30 bis 50 Gew.-%. Die Estereinheiten liegen in statistischer Verteilung in den Copolyestermakromolekülen vor.

Als Säurekomponente sowohl in den langkettigen als auch in den kurzkettigen Estereinheiten dienen aromatische Dicarbonsäuren mit Molekulargewichten von höchstens 300, vorzugsweise von 166 bis 250. Insbesondere eignen sich aromatische Dicarbonsäuren mit 8 bis 16, vorzugsweise 8 bis 12 Kohlenstoffatomen. Als Beispiel seien genannt die

Phenylendicarbonsäuren Terephthalsäure und Isophthalsäure sowie
Napththalin-1,5-dicarbonsäure, Naphthalin-2,6-dicarbonsäure,
Naphthalin-2,7-dicarbonsäure, 4,4'-Dicarboxy-diphenyl,
Bis(4-carboxyphenyl)-methan, Bis(4-carboxyphenyl)-ethan,
Bis(4-carboxyphenyl)-ether, Bis(4-carboxyphenyl)-sulfon,
1,2-Bis(4-carboxyphenyl)-ethan, Anthracen-5,10-dicarbonsäure,
Anthracen-1,4-dicarbonsäure, Anthracen-1,5-dicarbonsäure und
Anthracen-2,6-dicarbonsäure.

Anstelle der vorgenannten freien Säuren lassen sich auch die entsprechenden Halogenide, vorzugsweise Chloride, oder Ester mit niederen Alkoholen, vorzugsweise Dimethylester verwenden. Die Dicarbonsäuren oder ihre Derivate werden entweder einzeln verwendet oder auch als Gemisch; bevorzugt ist ein Gemisch aus Terephthalsäure und Isophthalsäure.

Die langkettigen Estereinheiten enthalten als Alkoholkomponente Diole mit Molekulargewichten von 350 bis 8000, vorzugsweise von 600 bis 6000 (Zahlenmittel). Insbesondere eignen sich endständige Hydroxylgruppen aufweisende Homopolymere, Copolymere und Blockcopolymere von Alkylenoxiden mit 2 bis 9, vorzugsweise 2, 3, 4 oder 5 Kohlenstoffatomen im Ring, z. B. Poly(ethylenoxid), Poly(propylenoxid), Poly(butylen-1,2-oxid), Polyoxethan, Polyoxolan, Polyoxan, Polyoxepan, Polyoxocan und Polyoxonan sowie Ethylenoxid/Propylenoxid-Copolymere, Ethylenoxid/Oxolan-Copolymere und Ethylenoxid/Propylenoxid-Blockcopolymere. Geeignet sind auch lineare Polyformale mit endständigen Hydroxylgruppen, die durch Umsetzung von Formaldehyd mit einem oder mehreren aliphatischen Diolen mit 2 bis 9, vorzugsweise 2, 3, 4 oder 5 Kohlenstoffatomen hergestellt werden, z. B.

Ethylenglykolpolyformal, Diethylenglykol-polyformal,
Propandiol-(1,3)-polyformal, Butandiol-(1,2)-polyformal,
Propandiol-(1,2)-polyformal, Butandiol-(1,4)-polyformal,
Pentandiol-(1,5)-polyformal und Hexandiol-(1,6)-polyformal.

Die Alkoholkomponente kann auch aus einem Gemisch von mehreren der vorgenannten Diole bestehen.

Die kurzkettigen Estereinheiten enthalten als Alkoholkomponente Diole mit einem Molekulargewicht von höchstens 250, vorzugsweise von 64 bis 150. Insbesondere eignen sich aliphatische Diole mit 2 bis 15, vorzugsweise 2 bis 8 Kohlenstoffatomen, z. B.

Ethylenglykol, Diethylenglykol, Propandiol-(1,2),
Propandiol-(1,3), 2,2-Dimethylpropandiol-(1,3),
Butandiol-(1,4), Pentandiol-(1,5), Hexandiol-(1,6), Dekandiol-(1,10),
1,4-Dihydroxymethyl-cyclohexan und Bis(4-Hydroxymethylcyclohexyl)-methan.

Die Alkoholkomponente kann auch aus einem Gemisch von mehreren der vorgenannten Diole bestehen. Falls die kurzkettigen Estereinheiten mehr als eine Alkohol- und/oder Säurekomponente enthalten, müssen mindestens 50% der Gesamtzahl der kurzkettigen Estereinheiten identisch sein.

Als Komponente C der erfindungsgemäßen Formmasse sind vor allem Copolyester geeignet, die aus Polyoxolan mit endständigen Hydroxylgruppen und einem Molekulargewicht (Zahlenmittel) von 800 bis 2000. Terephthalsäure, Isophthalsäure und Butandiol-(1,4) hergestellt sind.

Die Herstellung der erfindungsgemäß verwendeten Copolyester erfolgt nach bekannten Verfahren (vgl. z. B. US-Patentschriften 3 023 192 und 3 651 014). Üblicherweise wird die Dicarbonsäure oder das Gemisch der Dicarbonsäuren in Form der Dimethylester zusammen mit einem langkettigen Diol und einem Überschuß eines kurzkettigen Diols in Gegenwart eines Katalysators auf eine Temperatur von 150 bis 260°C erhitzt. Als Katalysator werden vor allem organische Titanate, z. B. Tetrabutyltitanat, verwendet, gegebenenfalls in Kombination mit Magnesiumacetat oder Calciumacetat. Nach Entfernen des durch die Esteraustauschreaktion entstandenen Methanols und überschüssiger Reaktionskomponenten, vorzugsweise durch Destillation, wird der gebrauchsfertige elastomere Copolyester erhalten.

Weiterhin werden als Komponente C erfindungsgemäß Polyurethane eingesetzt, die sich in

bekannter Weise nach dem Isocyanat-Polyadditionsverfahren herstellen lassen. Ihr Aufbau auf Grundlage der verschiedensten Polyisocyanate, Polyhydroxylverbindungen mit Molekulargewichten (Zahlenmittel) von etwa 500 bis 4000 und Kettenverlängerungsmitteln, wie polyfunktionellen niedermolekularen Polyalkoholen, Polyaminen, Wasser, Hydrazinen, oxethylierten Harnstoffen, oxethylierten Polyphenolen oder aromatischen Polyaminen, ist bekanntlich in übersichtlicher Verfahrensweise durchführbar. Durch die Art der Reaktionskomponenten, deren Mengenverhältnis, die Temperaturführung, unterschiedlich ablaufende, katalysierte oder unkatalysierte Kettenverlängerungs- und Verzweigungsreaktionen können der Aufbau und die Art der Endgruppe der hochmolekularen Polyadditionssprodukte überaus variabel gestaltet werden.

Die eingesetzten Produkte sind hochmolekulare Polyurethane, die aus Polyestern, Polyethern, wie Polyethylenglykolethern, Polypropylenglykolethern oder Polybutylenglykolethern, Polyesteramiden, Polythioethern oder Polyacetalen mit einem Molekulargewicht von 500 bis 4000 oder deren Pfropfderivaten mit z. B. Acrylnitril, Vinylacetat, Vinylchlorid und aromatischen oder aliphatischen Polyisocyanaten und Kettenverlängerungsmitteln, wie niedermolekularen Glykolen oder Wasser, hergestellt worden sind. Sie sollen bevorzugt einen relativ geringen Verzweigungsgrad besitzen und innere Viskositätswerte von 0,4 bis 2 (gemessen in Dimethylformamid bei 30° C) aufweisen; ihre Endgruppen können beispielsweise OH-, NCO-, Amino-, Hydrazin- bzw. substituierte Aminogruppen sein. Des weiteren können derartige bevorzugt verwendete Polyurethane innerhalb ihrer Ketten Uretdionringe oder ungesättigte, polymerisierbare oder mit Schwefel vernetzbare Gruppierungen, wie z. B. Reste des Allylmonoglycerinethers bzw. 1,4-Butendiols, enthalten; ferner auch Reste von Verbindungen, die einer Vernetzungsreaktion mit Formaldehyd zugänglich sind, wie z. B. von oxethylierten aromatischen Polyphenolen, bis-hydroxy-ethyliertem Anilin, m-Toluidin, Xylidin, hydroxy-alkylierten Harnstoffen, Urethanen oder Amiden.

Sofern die genannten verwendeten Polyurethanmassen einen merklichen Verzweigungs- bzw. Vernetzungsgrad besitzen, ist es vorteilhaft wenn die Verzweigungen aus thermisch leichter sich ablösenden Bindungen, wie z. B. Allophanat- oder Biuretverzweigungen bestehen, wie sie z. B. durch Verwendung von orthosubstituierten Polyisocyanaten gemäß der französischen Patentschrift 1 339 349 aufgebaut werden können. Zu nennen sind aber auch kettenverlängerte Polyurethanmassen, die nach der Verfahrensweise der französischen Patentschrift 1 358 139 mit einem Überschuß von mehr als 500% an Polyisocyanat hergestellt werden, wobei gegebenenfalls auch ungesättigte Polyhydroxylverbindungen und als Vernetzungsmittel polymerisationsfähige, monomere Vinylverbindungen mitverwendet werden können.

Die erfindungsgemäße Formmasse wird zweckmäßigerweise durch Mischen der Komponenten, die vorzugsweise jeweils in Form von Pulver oder Granulat vorliegen, und anschließendes Homogenisieren hergestellt. Das Mischen erfolgt üblicherweise bei Raumtemperatur, vorzugsweise bei einer Temperatur von 15 bis 30°C, und das Homogenisieren erfolgt in beliebigen heizbaren Mischwerken, z. B. Walzen, Kalandern, Knetern oder Extrudern, bei einer Temperatur oberhalb des Kristallitschmelzpunktes des Polyoxymethylens, d. h. bei einer Temperatur von 150 bis 250°C, vorzugsweise von 170 bis 220°C; besonders günstig ist eine Temperatur von 175 bis 200°C. Alle Komponenten der erfindungsgemäßen Formmasse müssen sich in dem vorgenannten Temperaturbereich verarbeiten lassen. Bei der Homogenisierung kann unter Umständen eine partielle Vernetzung der Elastomerkomponente erfolgen, die aber in der Regel nicht nachteilig für die Eigenschaften der Mischung ist.

Die erfindungsgemäße Formmasse enthält gegebenenfalls noch die bekannten Zusatzstoffe, insbesondere Stabilisatoren und/oder Füllstoffe sowie Nukleierungsmittel, Antistatika, flammhemmende Mittel, Gleit- und Schmiermittel, Weichmacher, Pigmente, Farbstoffe, optische Aufheller oder Entformungshilfsmittel.

Als Stabilisatoren gegen den Einfluß von Wärme eignen sich insbesondere Polyamide, Amide mehrbasiger Carbonsäuren, Amidine, z. B. Dicyandiamid, Hydrazine, Harnstoffe, Poly-(N-vinyllactame) und Erdalkalisalze von aliphatischen, vorzugsweise hydroxylgruppenhaltigen, ein- bis dreibasigen Carbonsäuren mit 2 bis 20 Kohlenstoffatomen, z. B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 bis 13, vorzugsweise 7, 8 oder 9 Kohlenstoffatome aufweisen, mit Diolen, die 2 bis 6 Kohlenstoffatome enthalten. Als Lichtstabilisatoren sind $\alpha$-Hydroxybenzophenonderivate und Benzotriazolderivate geeignet. Die Stabilisatoren werden in einer Menge von insgesamt 0,1 bis 5, vorzugsweise 0,5 bis 3 Gew.-% (bezogen auf die gesamte Formmasse) eingesetzt.

Als Füllstoffe dienen beispielsweise Asbestfasern, Glasfasern, Glaspulver, Graphit, Ruß, Metallpulver, Metalloxide, Silikate, Carbonate und Molybdän(IV)-sulfid. Die Menge des Füllstoffes beträgt 10 bis 70, vorzugsweise 20 bis 40 Gew.-% (bezogen auf die gesamte Formmasse).

Die erfindungsgemäßen Formmassen aus dem Polyoxymethylen A, der Elastomerkomponente B und dem Verarbeitungshilfsmittel C zeichnen sich dadurch aus, daß ihre mechanischen Eigenschaften, insbesondere ihre Schlagzähigkeit im Vergleich zu den bereits erwähnten Zweier-Gemischen aus Polyoxymethylen und einer Elastomerkomponente weiter verbessert sind. Dies synergistische Verhalten von als Einzelkomponenten ebenfalls wirksamen Elastomeren war bei dem sehr

unterschiedlichen chemischen Aufbau der Komponenten nicht zu erwarten. Überraschend ist ferner die Tatsache, daß die Homogenisierung der erfindungsgemäßen Dreier-Mischungen mit bedeutend geringeren Scherkräften im Mischaggregat erreicht werden kann, als es beispielsweise in der DE-A-1 769 560 für Zweier-Mischungen beschrieben wird. Vorteilhaft an den erfindungsgemäßen Formmassen ist weiterhin, daß die Bedingungen bei der thermoplastischen Verarbeitung zu geformten Gegenständen in weiten Grenzen variiert werden können, ohne daß daraus schlechtere Zähigkeitseigenschaften resultieren.

Die erfindungsgemäße Formmasse läßt sich mechanisch, z. B. durch Zerhacken oder Mahlen, zu Granulaten, Schnitzeln, Flocken oder Pulver zerkleinern. Sie ist thermoplastisch und wird durch Spritzgießen, Strangpressen, Schmelzspinnen oder Tiefziehen verarbeitet. Sie eignet sich als technischer Werkstoff zur Herstellung von Halbzeug und Fertigteilen, wie Formkörpern, z. B. Bändern, Stäben, Platten, Filmen, Rohren und Schläuchen sowie Maschinenteilen, z. B. Gehäusen, Zahnrädern, Lagerteilen und Steuerelementen.

Die nachfolgenden Beispiele beschreiben die vorliegende Erfindung.

Die in diesen Beispielen benutzten Größen wurden wie folgt bestimmt:

RSV-Wert

a) Polyoxymethylen:
Messung in Butyrolacton, stabilisiert mit 2 Gew.-% Diphenylamin, bei 140° C in einer Konzentration von 0,5 g/100 ml.

b) Komponente C:
Messung in Phenol/Tetrachlorkohlenstoff-Mischung im Gewichtsverhältnis 3 : 2 bei 25° C in einer Konzentration von 1 g/100 ml.

Schmelzindex:
Messung bei 190° C und 2,16 kp Belastung entsprechend ASTM-D-1238.

Molekulargewicht:
Bestimmung nach der gelchromatischen Methode.

Durometer-Härte:
Nach ASTM-D-2240.

Erweichungspunkt:
Messung nach der sogenannten Ring-Kugel-Methode (ASTM-E-28).

Dichte:
Nach DIN 53 479.

Schlagzähigkeit:
Messung mit Hilfe eines Falltests. Die jeweils zu prüfende Platte wird dabei auf einen Rahmen aufgespannt und einer Schlagbeanspruchung dadurch ausgesetzt, daß man einen Fallhammer mit einem Gewicht von 500 g, dessen auftreffender Teil als Halbkugel mit einem Durchmesser von 2 cm ausgebildet ist, aus verschiedenen Höhen reibungsarmgeführt senkrecht auf die Platte fallen läßt. Als Maß für die Schlagzähigkeit wird die Höhe angegeben, bei der 50% der Platten zerstört werden (Mittelwert aus 25 Fallversuchen). Die maximale Fallhöhe beträgt 250 cm.

Beispiele

Verschiedene Gewichtsanteile der Komponenten A (Polyoxymethylen), B (Elastomer) und C (Verarbeitungshilfsmittel) werden in Pulver- oder Granulatform, gegebenenfalls unter Zusatz von geeigneten Stabilisatoren, bei Zimmertemperatur gemischt, in einem Zweischneckenextruder bei 200° C aufgeschmolzen, homogenisiert und als Strang ausgepreßt. Die Verweilzeit im Extruder beträgt ca. 4 Minuten. Der Strang wird in kurze Stücke geschnitten und das erhaltene getrocknete Granulat auf einer Spritzgußmaschine zu Platten von 60 × 60 × 2 mm verarbeitet.

1. **Komponente A I**
**Copolymerisat aus 98 Gew.-% Trioxan und 2 Gew.-% Ethylenoxid, das primäre Alkoholendgruppen aufweist und einen RSV-Wert von 0,8 dl · $g^{-1}$, eine Dichte von 1,41 g · $cm^{-3}$ und einen Kristallitschmelzpunkt von 166° C besitzt.**

Als Stabilisator diente 0,1% Calcium-Ricinoleat und 0,5% 1,6-Bis-[β-(3,5-di-tert.butyl-4-hydroxyphenyl)-proprionyloxy]-hexan.

2. Komponente A II
Copolymerisat entsprechend A I, jedoch mit einem RSV-Wert von 1,1 dl · $g^{-1}$.

3. Komponente A III
Copolymerisat entsprechend A I, jedoch mit einem RSV-Wert von 0,63 dl · $g^{-1}$.

4. Komponente A IV
Polyformaldehyd, dessen Halbactalendgruppen durch Umsetzung mit Essigsäureanhydrid verschlossen sind und der einen RSV-Wert von 0,8 dl · $g^{-1}$, eine Dichte von 1,43 g · $cm^{-3}$ und einen Kristallitschmelzpunkt von 181°C besitzt. Als Stabilisator diente 1% Mischpolyamid aus Caprolactam, Hexamethylendiamin, Adipinsäure und Sebacinsäure und 0,3% Bis-[β-(3,5-di-tert.-butyl-4-hydroxyphenyl)-propionyloxy]-hexan.

5. Komponente B I
Copolymerisat aus Ethylen und Vinylacetat mit einem Vinylacetat-Anteil von 32–34 Gew.-%, das einen Schmelzindex von 22–28 g/10 Min. aufweist. Die Dichte beträgt 0,957 g · $cm^{-3}$ und die Durometer-Härte 67 A. Erweichungspunkt = 116°C.

6. Komponente B II
Copolymerisat aus Ethylen und Vinylacetat mit einem Vinylacetat-Anteil von 27–29 Gew.-%, das einen Schmelzindex von 125–127 g/10 Min. aufweist. Die Dichte beträgt 0,949 g · $cm^{-3}$ und die Durometer-Härte 67 A. Erweichungspunkt = 88°C.

7. Komponente C I
Copolyester, der aus 390 Gewichtsteilen Terephthalsäuredimethylester, 100 Gewichtsteilen Isophthalsäuredimethylester, 195 Gewichtsteilen Butandiol-1,4 und 447 Gewichtsteilen Polyoxolan mit einem Molekulargewicht von 1000 (Zahlungsmittel) hergestellt wurde. Seine Dichte beträgt 1,17 g · $cm^{-3}$. Der RSV-Wert der Copolyester beträgt 2,78 dl · $g^{-1}$ und die Durometer-Härte 92 A.

8. Komponente C II
Copolyester entsprechend C I ohne Verwendung von Isophthalsäuredimethylester. Die Durometer-Härte beträgt in diesem Fall 55 D bzw. 97 A. Die Dichte beträgt 1,20 g · $cm^{-3}$.

9. Komponente C III
Copolyester entsprechend C II mit einer Durometer-Härte von 63 D und 100 A. Dichte 1,22 g · $cm^{-3}$.

10. Komponente C IV
Polyesterurethan mit einer Durometer-Härte 78 A, einer Dichte von 1,18 g · $cm^{-3}$ und einer Vicat-Erweichungstemperatur (ASTM-D-1525) von 90°C.

11. Komponente C V
Polyesterurethan, Durometer-Härte 55 D, Dichte = 1,22 g · $cm^{-3}$, Vicat-Erweichungstemperatur = 160°C.

| Beispiel Nr. | Komponente in Gewichtsprozent | | | Fallhöhe [cm] |
|---|---|---|---|---|
| | Polyoxy-methylen | Elastomer | Verarbeitungs-hilfsmittel | |
| Vergleich | 100 A I | – | – | 19 |
| Vergleich | 92 A I | 8,0 B I | – | 213 |
| Vergleich | 92 A I | – | 8,0 C I | 160 |
| 1 | 92 A I | 4,0 B I | 4,0 C I | >250 |
| 2 | 92 A I | 7,2 B I | 0,8 C I | >250 |
| 3 | 92 A I | 7,9 B I | 0,1 C I | 220 |
| Vergleich | 95 A I | 5,0 B I | – | 180 |
| Vergleich | 95 A I | – | 5,0 C I | 135 |
| 4 | 95 A I | 2,5 B I | 2,5 C I | >250 |
| 5 | 95 A I | 4,5 B I | 0,5 C I | >250 |
| 6 | 95 A I | 4,9 B I | 0,1 C I | 225 |
| Vergleich | 97 A I | 3,0 B I | – | 181 |
| Vergleich | 97 A I | – | 3,0 C I | 80 |
| 7 | 97 A I | 2,0 B I | 1,0 C I | 238 |
| 8 | 97 A I | 2,5 B I | 0,5 C I | 214 |
| 9 | 97 A I | 2,75 B I | 0,25 C I | 230 |
| 10 | 97 A I | 2,85 B I | 0,15 C I | 240 |
| 11 | 97 A I | 2,95 B I | 0,05 C I | 246 |
| Vergleich | 99 A I | 1,0 B I | – | 71 |
| Vergleich | 99 A I | – | 1,0 C I | 29 |
| 12 | 99 A I | 0,99 B I | 0,01 C I | 110 |
| Vergleich | 97 A I | 3,0 B II | – | 120 |
| Vergleich | 97 A I | – | 3,0 C I | 80 |
| 13 | 97 A I | 1,5 B II | 1,5 C I | >250 |
| 14 | 97 A I | 2,55 B II | 0,45 C I | >250 |
| Vergleich | 97 A I | 3,0 B I | – | 181 |
| Vergleich | 97 A I | – | 3,0 C II | 60 |
| 15 | 97 A I | 2,85 B I | 0,15 C II | >250 |
| 16 | 97 A I | 2,25 B I | 0,75 C II | >250 |
| Vergleich | 97 A I | 3,0 B I | – | 200 |

Fortsetzung

| Beispiel Nr. | Komponente in Gewichtsprozent | | | Fallhöhe [cm] |
|---|---|---|---|---|
| | Polyoxymethylen | Elastomer | Verarbeitungshilfsmittel | |
| Vergleich | 97 A I | – | 3,0 C III | 39 |
| 17 | 97 A I | 2,25 B I | 0,75 C III | >250 |
| 18 | 97 A I | 2,85 B II | 0,15 C II | 240 |
| 19 | 97 A I | 2,55 B II | 0,45 C III | >250 |
| Vergleich | 97 A I | – | 3,0 C IV | 45 |
| 20 | 97 A I | 2,85 B I | 0,15 C IV | 230 |
| Vergleich | 97 A I | – | 3,0 C V | 60 |
| 21 | 97 A I | 2,85 B I | 0,15 C V | 200 |
| Vergleich | 100 A II | – | – | 14 |
| Vergleich | 97 A II | 3,0 B I | – | 48 |
| Vergleich | 97 A II | – | 3,0 C I | 18 |
| 22 | 97 A II | 2,85 B I | 0,15 C I | 59 |
| Vergleich | 100 A III | – | – | 35 |
| Vergleich | 97 A III | 3,0 B I | – | 210 |
| Vergleich | 97 A III | – | 3,0 C I | 96 |
| 23 | 97 A III | 2,85 B I | 0,15 C I | >250 |
| Vergleich | 100 A IV | – | – | < 13 |
| Vergleich | 97 A IV | 3,0 B I | – | 150 |
| Vergleich | 97 A IV | – | 3,0 C I | 25 |
| 24 | 97 A IV | 2,55 B I | 0,45 C I | >250 |

**Patentansprüche**

1. Formmasse, bestehend aus einer Mischung von

A) 99,89 bis 60 Gew.-% eines Polyoxymethylens,
B) 0,1 bis 40 Gew.-% eines Elastomers mit einer Erweichungstemperatur unterhalb des Kristallitschmelzpunktes des Polyoxymethylens gemäß A) und mit einer Einfriertemperatur von −120° C bis +30° C und
C) 0,01 bis 20 Gew.-% eines segmentierten, thermoplastischen Copolyesters oder eines Polyurethans.

2. Formmasse gemäß Anspruch 1, dadurch gekennzeichnet, daß die Komponente A eine reduzierte spezifische Viskosität von 0,5 bis 1,5 dl · $g^{-1}$ besitzt.

3. Formmasse gemäß Anspruch 1 und 2, dadurch gekennzeichnet, daß die Komponente A ein Copolymeres aus Trioxan und einer Verbindung der Formel

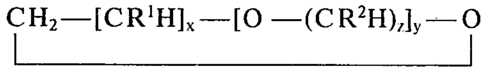

ist, in der

A) $R^1$ und $R^2$ gleich oder verschieden sind und jeweils ein Wasserstoffatom, einen aliphatischen Alkylrest mit 1 bis 6, vorzugsweise 1, 2, 3 oder 4 Kohlenstoffatomen oder einen Phenylrest bedeuten und
   a) x gleich 1, 2 oder 3 und y gleich Null ist oder
   b) x gleich Null, y gleich 1, 2 oder 3 und z gleich 2 ist oder
   c) x gleich Null, y gleich 1 und z gleich 3, 4, 5 oder 6 ist, oder

B) $R^1$ einen Alkoxymethylrest mit 2 bis 6, vorzugsweise 2, 3 oder 4 Kohlenstoffatomen oder einen Phenoxymethylrest bedeutet, wobei x gleich 1 und y gleich Null ist und $R^2$ die oben genannte Bedeutung hat.

4. Formmasse nach Anspruch 1 bis 3, dadurch gekennzeichnet, daß die Komponente B ein Homo- oder Copolymerisat von olefinisch ungesättigten Verbindungen der Formel

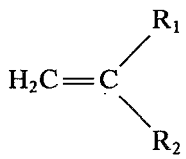

ist, in der $R_1$ ein Wasserstoffatom oder ein Methyl- oder Ethylrest ist und $R_2$ ein Wasserstoffatom, eine Carboxylgruppe oder die entsprechenden Salze mit einem Metall der I. bis III. Gruppe des periodischen Systems, eine Alkylcarboxylgruppe mit 2 bis 10 Kohlenstoffatomen, eine Acyloxygruppe mit 2 bis 5 Kohlenstoffatomen, eine Cyanogruppe, ein Phenylrest oder ein Vinylrest bedeutet.

5. Formmasse nach Anspruch 1 bis 4, dadurch gekennzeichnet, daß die Komponente B ein durchschnittliches Molekulargewicht zwischen 5000 und 150 000 besitzt.

6. Formmasse nach Anspruch 1 bis 5, dadurch gekennzeichnet, daß die Komponente C ein Copolyester ist, bestehend aus

a) 70 bis 50 Gew.-% Einheiten eines Esters aus mindestens einer aromatischen Dicarbonsäure mit einem Molekulargewicht von höchstens 300 und einem Diol mit einem Molekulargewicht von 350 bis 8000 und
b) 30 bis 50 Gew.-% Einheiten eines Esters aus mindestens einer aromatischen Dicarbonsäure mit einem Molekulargewicht von höchstens 300 und einem Diol mit einem Molekulargewicht von höchstens 250.

7. Formmasse nach Anspruch 1 bis 6, dadurch gekennzeichnet, daß die Komponente C ein Polyurethan ist, hergestellt aus Polyethern oder Polyestern mit OH-Endgruppen, Kettenverlängerungsmitteln und aromatischen oder aliphatischen Polyisocyanaten.

## Claims

1. Molding composition consisting essentially of a mixture of

A) from 99.89 to 60 weight % of an oxymethylene polymer;
B) from 0.1 to 40 weight % of an elastomer having a softening temperature of below the crystallite melting point of the oxymethylene polymer according to A) and a second order transition temperature of from −120 to +30° C; and
C) from 0.01 to 20 weight % of a segmented thermoplastic copolyester or a polyurethane.

2. Molding composition as claimed in claim 1, wherein component A has a reduced specific viscosity of from 0.5 to 1.5 dl/g$^{-1}$.

3. Molding composition as claimed in claims 1 and 2, wherein component A is a copolymer of trioxan and a compound of the formula

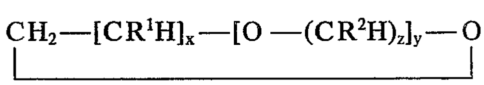

wherein

A) $R^1$ and $R^2$ are identical or different, and each represent a hydrogen atom, an aliphatic alkyl radical having from 1 to 6, preferably 1, 2, 3 or 4 carbon atoms, or a phenyl radical; and
   a) x is 1, 2 or 3 and y is zero; or
   b) x is zero, y is 1, 2 or 3, and z is 2; or
   c) x is zero, y is 1 and z is 3, 4, 5 or 6; or

B) $R^1$ is an alkoxymethyl radical having from 2 to 6, preferably 2, 3 or 4 carbon atoms, or a phenoxymethyl radical where x is 1 and y is zero, and $R^2$ is as defined above.

4. Molding composition as claimed in claims 1 to 3, wherein component B is a homo- or copolymer of olefinically unsaturated compounds of the formula

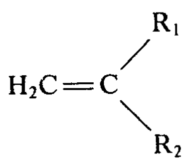

in which $R^1$ is a hydrogen atom or a methyl or ethyl radical, and $R_2$ is a hydrogen atom, a carboxyl group or the corresponding salts with a metal of the Ist to IIIrd group of the Periodic Table, an alkylcarboxy group having from 2 to 10 carbon atoms, an acyloxy group having from 2 to 5 carbon atoms, a cyano group, a phenyl radical or a vinyl radical.

5. Molding composition as claimed in claims 1 to 4, wherein component B has an average molecular weight of from 5000 to 150 000.

6. Molding composition as claimed in claims 1 to 5, wherein component C is a copolyester consisting of

a) from 70 to 50 weight % units of an ester of at least one aromatic dicarboxylic acid having a molecular weight of a maximum 300 and a diol having a molecular weight of from 350 to 8000, and
b) from 30 to 50 weight % units of an ester of at least one aromatic dicarboxylic acid having a molecular weight of a maximum 300 and a diol having a molecular weight of a maximum 250.

7. Molding composition as claimed in claims 1 to 6, wherein component C is a polyurethane prepared from polyethers or polyesters having OH terminal groups, chainlengthening agents and aromatic or aliphatic polyisocyanates.

**Revendications**

1. Matière à mouler constituée d'un mélange:

A) de 99,89 à 60% en poids d'un polyoxyméthyléne,
B) de 0,1 à 40% en poids d'un élastomère ayant une température de ramollissement inférieure au point de fusion des cristallites du polyoxyméthylène A) et une température de transition vitreuse de $-120$ à $+30°C$, et
C) de 0,01 à 20% en poids d'un copolyester segmenté thermoplastique ou d'un polyuréthanne.

2. Matière à mouler selon la revendication 1, caractérisée en ce que la composante A a une viscosité spécifique réduite de 0,5 à 1,5 $dl \cdot g^{-1}$.

3. Matière à mouler selon l'une des revendications 1 et 2, caractérisée en ce que la composante A est un copolymère du trioxanne et d'un composé répondant à la formule

$$\underline{CH_2—[CR^1H]_x—[O—(CR^2H)_z]_y—O}$$

dans laquelle

A) $R^1$ et $R^2$ représentent chacun, indépendamment l'un de l'autre, un atome d'hydrogène, un radical alkyle aliphatique contenant de 1 à 6 atomes de carbone, de préférence 1, 2, 3 ou 4, ou un radical phényle, et
   a) x est égal à 1, à 2 ou à 3 et y est égal à 0 ou
   b) x est égal à 0, y à 1, à 2 ou à 3 et z à 2 ou
   c) x est égal à 0, y à 1 et z à 3, à 4, à 5 ou à 6, ou

B) $R^1$ représente un radical alcoxy-méthyle contenant de 2 à 6 atomes de carbone, de préférence 2, 3 ou 4, ou un radical phénoxy-méthyle, x étant alors égal à 1 et y à 0.

4. Matière à mouler selon l'une quelconque des revendications 1 à 3, caractérisée en ce que la

composante B est un homopolymère ou copolymère de composés éthyléniques répondant à la formule:

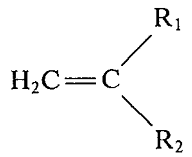

dans laquelle $R^1$ représente un atome d'hydrogène ou un radical méthyle ou éthyle et $R^2$ représente un atome d'hydrogène, un groupe carboxy éventuellement sous la forme d'un sel avec un métal d'un des groupes I à III de la classification périodique, un radical alcoxycarbonyle contenant de 2 à 10 atomes de carbone, un radical acyloxy contenant de 2 à 5 atomes de carbone, un groupe cyano, un radical phényle ou un radical vinyle.

5. Matière à mouler selon l'une quelconque des revendications 1 à 4, caractérisée en ce que la composante B a un poids moléculaire moyen compris entre 5000 et 150 000.

6. Matière à mouler selon l'une quelconque des revendications 1 à 5, caractérisée en ce que la composante C est un copolyester constitué:

a) de 70 à 50% en poids de motifs d'un ester dérivant, d'une part, d'au moins un acide dicarboxylique aromatique ayant un poids moléculaire d'au plus 300 et, d'autre part, d'un diol ayant un poids moléculaire compris entre 350 et 8000 et
b) de 30 à 50% en poids de motifs d'un ester dérivant, d'une part, d'au moins un acide dicarboxylique aromatique ayant un poids moléculaire d'au plus 300 et, d'autre part, d'un diol ayant un poids moléculaire d'au plus 250.

7. Matière à mouler selon l'une quelconque des revendications 1 à 6, caractérisée en ce que la composante C est un polyuréthanne qui a été préparé à partir de polyéthers et de polyesters à groupes —OH terminaux, d'allongeurs de chaînes et de poly-isocyanates aromatiques ou aliphatiques.